# Europäisches Patentamt
# European Patent Office
# Office européen des brevets

⑱

(11) Publication number:  **0 052 409**
**B1**

(12) **EUROPEAN PATENT SPECIFICATION**

(45) Date of publication of patent specification: **25.09.85**

(21) Application number: **81201269.8**

(22) Date of filing: **16.11.81**

(51) Int. Cl.⁴: **A 01 J 25/12,** A 01 J 25/13, A 01 J 25/15

(54) Semi-hard or hard cheese with central opening, processes of preparation thereof, as well as cheese mold for carrying out these processes.

(30) Priority: **18.11.80 NL 8006283**

(43) Date of publication of application:
**26.05.82 Bulletin 82/21**

(45) Publication of the grant of the patent:
**25.09.85 Bulletin 85/39**

(84) Designated Contracting States:
**AT BE CH DE FR GB IT LI LU NL SE**

(56) References cited:
**CH-A- 106 991**
**CH-A- 274 827**
**FR-A- 331 710**
**FR-A- 806 504**
**FR-A-2 050 342**
**FR-A-2 305 930**

(73) Proprietor: **Huisman, Jacob Pieter**
**'s-Gravenweg 78-80**
**NL-2911 CH Nieuwerkerk a.d. IJssel (NL)**

(72) Inventor: **Huisman, Jacob Pieter**
**'s-Gravenweg 78-80**
**NL-2911 CH Nieuwerkerk a.d. IJssel (NL)**

(74) Representative: **Rhijnsburger, Johan Gerard**
**'s-Gravenbroekseweg 32**
**NL-2811 GE Reeuwijk (NL)**

Courier Press, Leamington Spa, England.

## Description

The invention relates to a semi-hard or hard cheese with a central opening, a continuous or batch wise process of preparation thereof as well as apparatus and cheese mould for carrying out this process.

The invention especially relates to semi-hard and hard types of cheese, mainly of the type of Gouda cheese, Kanter cheese and Cheddar cheese. It offers advantages to provide hard or semi-hard cheese products with a central opening because salting and maturing are accelerated and cutting losses with the ready cheese products are reduced. It is known from FR—A—2050342, CH—A—106991, CH—A—274827, FR—A—331710 and FR—A—806504 to prepare cheese products with a central opening, but these are made from soft or semi-soft cheese, i.e. wherein in the preparation process no pressing step and draining of the whey is carried out. Only in CH—A—274827 a certain pressure is exerted on the cheese by its own weight but this is not sufficient to arrive at a semi-hard or hard cheese. Thus there are also no provisions to form a smooth, hard and continuous rind which is typical of the present type of cheese which must have a long keepability. The cited literature therefore does not give any suggestion how to obtain a cheese product of the type as aimed at consisting of semi-hard or hard cheese.

Thus the invention comprises a cheese model which may be flattened or not with a central opening characterized in that the cheese consists of semi-hard or hard cheese, especially of the Gouda, Kanter or Cheddar type, the surface of the central opening forming with the remainder of the surface of the cheese a continuous smooth rind. The meaning thereof is that the rind of the total cheese including that of the opening forms a smooth, continuous totality.

The invention especially relates to a cylindrical model, such as that of Gouda cheese, Kanter cheese and Cheddar cheese, provided with a central opening which is preferably round.

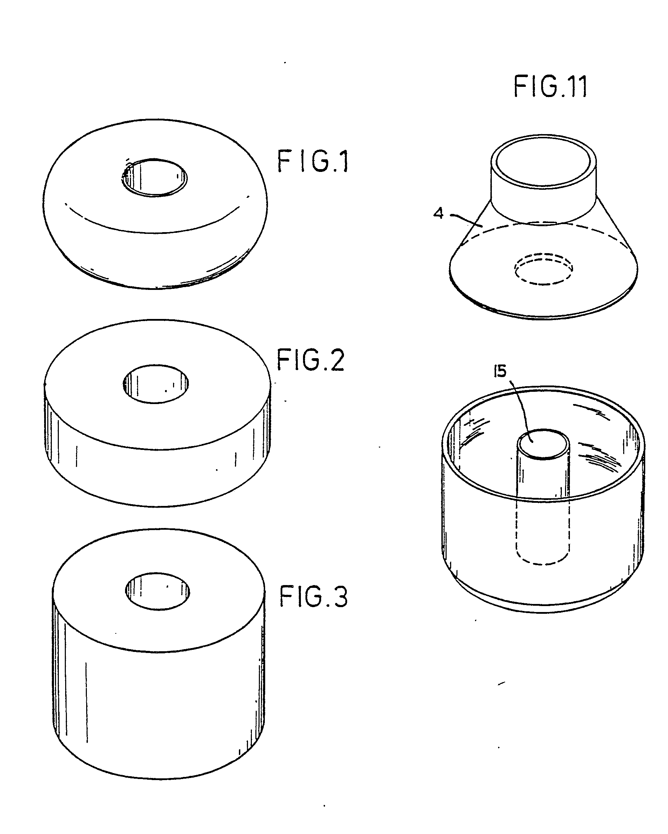

Said cheese types are marketed in specific standard models. The Gouda model consists of a cylindrical flat form with round sides, the Kanter model of a flat cylinder with rounded edges at one side, and the Cheddar model of a cylindrical form. These models, which are made in various sizes, wherein the height of the cylinder of the Cheddar type is dependent on the height of the cheese mould chosen, are indicated in figures 1—3 of the drawing. The weight classes of the cheese may vary from 0.5 to 25 kg and still heavier. These cheese types as well as the requirements they have to satisfy are further described in the E.E.C. List of Goods A-Suppl. 19 (1-1-1980), 04.04.

It may be understood that the invention is in principle also applicable to each type of semi-hard or hard, round or elliptical type of cheese which does not exactly conform to the standardized models.

It is an essential feature of the invention that the cheese models are distinguished by a continuous transition of the rind of the central open part to the body of the cheese. The edges are preferably rounded and the transition is smooth. The transition may also be rectangular, dependent on the desired model, wherein however the transition of the rind is not interrupted and comparable with that of for example a rectangular solid cheese or the straight transition of a solid Kanter model. The size of the central opening may be varied, the lower limit being determined by the condition that the pieces obtained are as flat as possible, the upper limit being determined by practical considerations.

The diameter of the opening is preferably not larger than half the diameter of the cheese of a round model or half the axes of an elliptical model. Usually the value of the ratio lies in the range of about 1/2 to 1/4 and is in practice of the order of about 1/3, which value for an ellipse as previously mentioned relates to both axes. For such a model the height of the cheese of a Gouda type is about 1/3 of the diameter.

A rectangular or square piece of cheese which ends in 2 half spheres is also considered an elliptical model, with diameters equal to the sides where the spheres are lying. The same conditions are valid relating to the half spheres which are considered as a whole while the same requirement is valid for the distance of the straight part. For these models it is also preferred that the central elliptical opening is uniform with the circumference of the cheese.

For models with a central opening which is not uniform with the circumference of the cheese one may maintain about the same proportions, for example by starting from the circumscribed circle of the rectangular or square central opening, it being understood that always the condition has to be satisfied that sufficiently flat pieces are obtained.

The invention thus provides a batch process for preparing a cheese of the aforementioned type wherein in the cheese mould in which the curd is pressed into its definite shape, while the greater part of the residual whey is driven out, provisions are made consisting of one or more central moulders to bring about the final desired shape without disturbing the further preparation process. Briefly the process is characterized in that during the stage wherein the curd is put in the cheese mould and compressed and during further treatments, one or more porous central moulders are present which screen off the desired central part from the cheese model. Thus, in the cheese mould a central, preferably porous, moulder is applied with a circumference adapted to the desired central opening and during the introduction and compression of the curd a central open space is screen off therefor.

Under central moulder is understood a part which is centrically fitted in the cheese mould and which during the introduction of the curd and also during subsequent treatment forms a fixed part thereof and screens off a central space for the curd. The central moulder may be a cylindrical part, which may be hollow or not, open at the top or closed, and having a desired cross-section, which is centrically placed and is integral therewith. The central moulder is in itself porous or provided with openings to promote drainage of whey.

The central moulder has a total effective height which is at least equal to that of the cheese mould.

In one embodiment of the batchwise production of a cheese of the aforementioned type a removable central moulder is used which is preferably open at the top and is combined with a second open cylindrical moulder, which fits in and is movable in the central moulder.

The preparation of the cheese model according to the invention experiences difficulties with those types of preparations wherein in the cheese mould a netting material "cheese cloth" must be present necessary to remove the whey and obtain a good crust formation. It has been found that by using a central moulder made of an inert material provided with small holes, particularly consisting of stainless steel, preferably of the type as designed for the cheese industry, no netting need be present over the walls of the central moulder, by which the procedures are very much simplified. Similar metal materials have already been used for the cheese moulds themselves but appear to have given difficulties because the curd cools off too fast, which causes the rind to close too quickly. It is a further advantage of the invention that by applying a porous central moulder in cases as aforementioned the open cheese model can be prepared without affecting the quality of the cheese. Also the rind formation is not inhibited or affected on the level of the central moulder behind the wall where the second central moulder is present.

In the embodiment as above described, wherein the central moulder is removable, said moulder cooperates with a second separate moulder, preferably of a similar porous material, which preferably is internally movable in the central moulder. In this embodiment, which offers the advantage of direct applicability in an existing cheese mould, the height of the second central moulder is chosen in such a way that when compressing the curd the upper part of the second moulder remains above the top level of the central moulder to avoid that the pressure would fall away and only on the top level of the central moulder pressure would be exerted. On the other hand the height of the second central moulder together with that of the other moulder need not be greater than the height of the cheese mould in the extended position. The central moulder is porous and of the same type as the central moulder to enable passing of the whey and formation of rind along the face of the first central moulder as well as above the top level thereof and below it. By utilizing the second central moulder the rind formation does not appear to be disturbed. The height of the second moulder will be chosen relative to that of the first moulder in such a way that the second moulder at the desired compression of the curd will not be pressing on the bottom.

It is desirable when introducing the curd into the cheese mould or during compression to keep the central moulder centered during working. One method to realize this is by a centralizing member preferably consisting of a thread or bar which is movable around the edge of the cheese mould and is provided with a central pin with a cross member. This pin is introduced into a central opening of the central moulder and by rotating the strip therein one turn the pin will be fixed. In this way the central moulder cannot be moved out of its central position until the mould is filled with curd. Other methods are also possible, such as by applying a centre pin through a threaded opening in the bottom of the mould. By tightly screwing the centre pin the central moulder will be kept in position.

In a second embodiment the central moulder is fixedly attached to the cheese mould or is integral therewith, the compression of the curd being carried out by the follower, which is provided with a central opening fitting around the fixed central moulder. The invention also relates to a cheese mould applicable to the preparation of cheese, provided with a fixed central moulder as well as a moulder combination which can be removably fitted in a cheese mould as above described.

The materials used for the cheese mould including the follower and the central moulders need not be identical. When using a plastic cheese mould there should be present a cloth respectively netting between the wall of the mould and the central moulder and below the follower. If the fixed central moulder does not consist of a porous, hollow, partly hollow or solid porous material, the cloth or netting should be placed over the central moulder. The follower with central opening, which as earlier mentioned is provided with a cloth or netting, moves downwards along the cloth or netting at the wall and the circumference of the central moulder during pressing.

The central moulder preferably consists of a porous material, i.e. a material provided with small openings, like plastic or metal or metal alloy suitable for use in the dairy industry, in which case the cloth or netting may be omitted.

In a further embodiment the central moulder along the circumference of the mould may be provided with an upright edge extending to the edge of the mould which latter thus functions as an inner mould, preferably a thin porous metal edge of about one mm thickness fitting completely within the mould. In such a case the cheese cloth or netting in the cheese mould may completely be omitted, the porous edge then functioning as cheese netting. In such a variation the cheese mould itself may consist of any material suitable for cheese mould.

The fixing of the central moulder cooperating with the second moulder may, if needed, be facilitated by inserting in the bottom of the cheese mould a removable part, for example a truncated part, which can only be removed from the cheese mould in an upwards direction. The central moulder may be attached to such a part and taken up in the bottom of the cheese mould, which has the advantage that centralizing measures become superfluous. After use an identical insert may be applied in the opening in the bottom, which makes the cheese mould suitable for the preparation of the usable cheese model.

It is also possible to place the central moulder in the bottom of the cheese mould through a central opening via the bottom part and make provisions to enable the central moulder to move the right distance downwards during the compression step of the curd. For this purpose the cheese mould may for instance be provided with a ringlike edge at the bottom side of the vessel with a height sufficient to accommodate for the downward movement of the central moulder. This ring or otherwise shaped spacer may or may not be attached to the cheese mould or be integral therewith. This variation is especially suitable for a plastic cheese mould, of which the cheese netting is provided with a central opening and the porous central moulder consisting of metal or plastic or fillingly inserted in the cheese mould from the bottom part thereof. Preferably use is made of a plastic porous material, which is commercially available as Laude material by which the use of netting becomes superfluous.

In a preferred embodiment the cheese mould consists of a fixed central moulder cooperating with a follower with a central opening made of a porous plastic as above mentioned. In that case the central moulder is preferably rounded at the transition of the bottom of the cheese mould, the bottom itself also being rounded. The edge of the follower has a counter rounding for the Gouda model which when a Kanter model is desired is missing.

The invention also comprises a continuous process for preparing cheese wherein use is made of the following system, as disclosed in FR—A—2305930.

In a specifically advantageous embodiment the curd with whey is fed by means of a pump through a column, which column is provided with enlarged perforated sections for draining off the whey. The curd is transported through the column and is resting on a slide-bottom/knife, which after the curd has reached a certain firmness is withdrawn, the column of curd being fed into the dosing cylinder provided with a perforated dosing plate. This dosing plate is movable by means of a pneumatically or hydraulically operated piston, the downward movement being precisely adjusted to the dosing. After the dosing plate (and thus also the curd) has reached its adjusted position the slide-bottom with the knife is moved forwards and a block of curd cut to to the right size. This block of curd then rests on the dosing plate, the bottom/knife plate again forming the bottom of the cylindrical column. The dosing plate now moves upwards to prepress the curd to remove a substantial portion of the whey and give firmness to the curd. After the prepressing the dosing plate will move back again and the block of curd in the cylinder is moved sidewards in the filling room and introduced into the cheese mould, which is transported for further treatments. This cycle is thereafter repeated.

According to a preferred embodiment of the invention using the above mentioned system the curd is transported through a column provided with a central moulder pipe with the same diameter as the central space to be provided in the cheese, the so shaped curd is moved in the dosing cylinder constructed as a shaping trough, the dosing plate being provided with a centrically movable piston which screens off the central space of the dosing cylinder corresponding to the central space screened off in the column, the bottom with knife plate is closed after filling the shaping trough while cutting off a dosed piece of curd, next the dosing plate around the central piston is moved upwards in order to prepress the curd, whereafter the dosing plate with central piston is moved downwards to the adjusted lower position, the dosing plate and central piston lying in one face and next the block of curd is moved sidewards out of the shaping trough and transported to the filling trough where it is filled into the cheese mould, provided with a central moulder according to the invention, which cheese mould subsequently is subjected to further treatments.

In another embodiment the moulder pipe in the feeding column of the curd is not made in a fixed form but is movable to the level of the bottom-dosing plate to screen off the central space during the filling of the curd into the dosing-shaping trough. After filling of the shaping trough the block of curd is cut by the knife bottom of the feeding column which has the shape of semi-circular knives.

Just as in the other embodiment the block of curd is first prepressed by the upwards moving bottom-dosing plate and after the dosing plate has been returned to the adjusted position the moulder pipe is withdrawn in the curd feeding pipe. After removing the block of curd in the manner as earlier described the cycle may be started again.

In the previous processes was started from a definite type of continuous feeding of the curd. The cheese according to the invention may however be obtained, independent of how the continuous formation of the predetermined block of curd is carried out, by making provisions to remove the central part of the block of curd just before the step of the block of curd being introduced into the cheese mould.

In this embodiment an upper part is placed on the central moulder of the cheese mould provided with cutting edges. When introducing the block of curd into the cheese mould by gravity the desired central part of the curd is cut off by means of this upper part, whereafter it will together with the upper part be removed. The upper part is preferably provided with an inwardly movable bottom to press out the cut off central piece, whereafter the upper part is again moved to its position above the central moulder of the cheese mould. In this method, which is applicable to each continuous line, it is however necessary to separately process the cut out pieces.

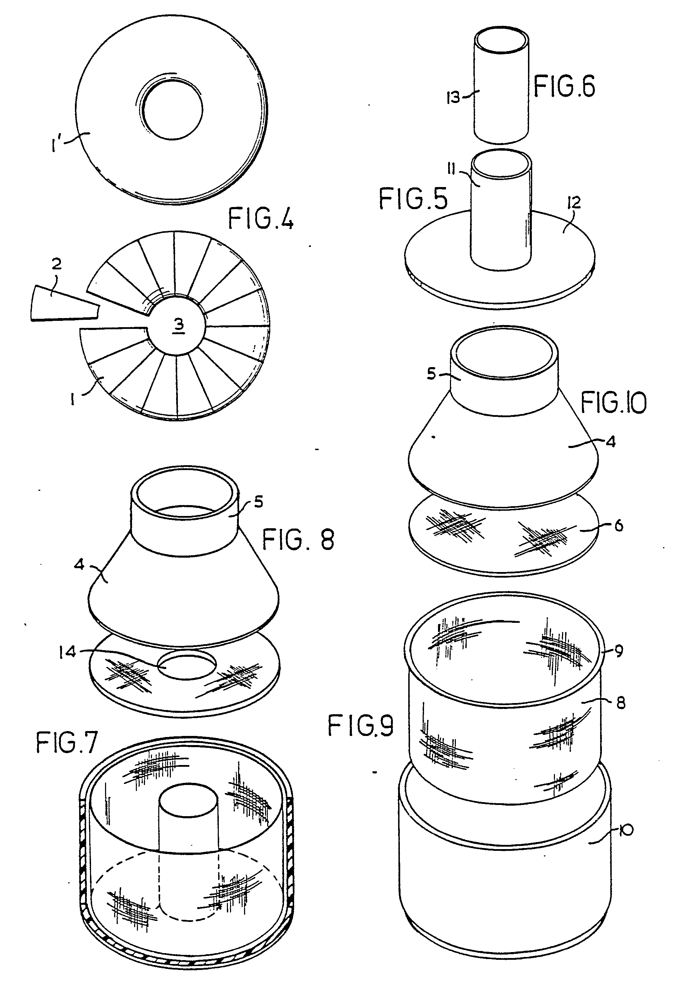

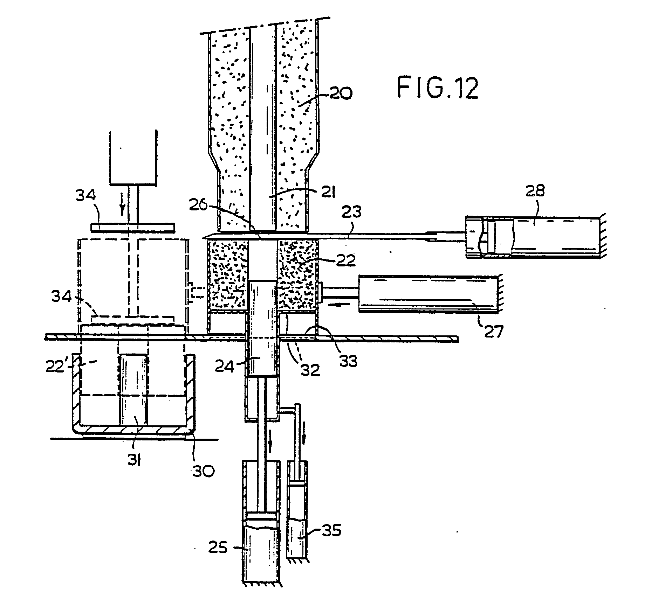

The invention will now be illustrated by means of the drawing wherein figure 1 is a cheese model of the Gouda-type, figure 2 a Kanter-type and figure 3 a Cheddar-type. Figure 4 shows a cheese model according to the invention in elevation in cut form. Figure 5 shows an embodiment of a central moulder to be inserted in a cheese mould according to the invention. Figure 6 shows in perspective an insert or hollow cylinder which is movable in the central moulder. Figure 7 shows in perspective a cheese mould with fixed central moulder attached to the bottom of the cheese mould. Figure 8 shows the cover of the cheese mould to be used in the embodiment of figure 7, while figure 9 shows in perspective a normal cheese mould. Figure 10 indicates the cover or so-called follower. In figure 11 a variation of the embodiment of figure 7 is illustrated wherein use is made of a porous plastic material owing to which the lining may be omitted. Finally, figure 12 illustrates a continuous preparation process wherein in the feeding pipe of the curd a central pipe is present and in the shaping trough an adjustable central piston, which screens off a central space in the shaping trough.

In figure 4 a cheese model according to the invention is indicated with a central opening 3, wherein the flat pieces to be cut out are shown schematically. The first flat part 2 cut out is indicated separately.

In figures 9 and 10 a normal cheese mould is illustrated, filled with curd from which by pressing the whey is removed. This cheese mould thus determines the shape of the final cheese product, which shape will no longer be subjected to substantial change after turning, trimming, salting etc. The mould may consist of plastic, metal of a combination thereof, and is composed of a cover or follower 4 provided with an upright edge 5, so that during the pressing stop no tilting movement can occur because of a non-centrically exerted force. In the follower an inner lining 6 may be present which for some mould is indispensable. The edge 7 fits around the edge of 4. The follower with inner lining fits in the perforated lining 8, which replaces the cloth used a.o. in wooden cheese moulds. This lining 8 is provided with a ring 9. Without this lining the whey would less easily run off and there would not be formed a good rind by the curd. Lining 8 fits in mould 10 and the follower therein is movable by pressure. The pressure which is exerted on the curd by the follower is usually empirically determined and indicated in terms of the downward movement of the follower.

In figure 5 the central moulder of the invention is illustrated consisting of a cylindrical hollow part 11, attached to or passing into an edge-shaped bottom 12. It fits totally in the bottom 12. The central moulder thus need not be fixed. Bottom 12 and part 11 consist of an inert material provided with small holes. Before the curd is introduced the second cylindrical central moulder 13 according to figure 6, which is hollow as well, is moved into the central moulder (11) to such an extent that the curd after introduction into the cheese mould is screened off in respect of the central opening of the central moulder. The follower is subsequently applied and pushed in moving the upper moulder downwards into the central moulder and also pressing the curd to a definite selected height. The cheese mould is usually filled to the upper part thereof, while the second moulder is of equal height as the central moulder or somewhat shorter. Cylinder 13 is preferably closed at the upper side. For an elliptical model both central moulders are naturally made in the form of ellipses.

In figure 7 and 8 a cheese mould is indicated containing a central moulder affixed thereto. This is at its lower part welded to the cheese mould or connected therewith in a somewhat extended rounded form and preferably not closed at the upper side. The height of the central moulder is at least equal to the height of the cheese mould and after the curd has been introduced into the cheese mould between the wall thereof and the central moulder, the follower as indicated in figure 8 is placed on the cheese mould. This follower is provided with a circular opening 14 of the size of the diameter of the central moulder 15 and is fittingly movable over the central moulder. When exerting pressure the follower will thus be moved downwards to the required level and the central space remains screened off.

The central moulders as mentioned preferably consist of a thin inert metal having a thickness of about 1 millimeter, wherein pores are present. It is also possible to use a porous plastic.

In figure 11 a cheese mould is indicated consisting of a plastic porous material as mentioned above as a consequence of which the nettings or linings may be omitted. Thus in this embodiment the liner 6 as shown in figure 10 is absent. The cheese mould is provided with a fixed central moulder, the arrangement being further identical to that of figure 7 and 8.

In figure 12 a continuous embodiment is shown. The curd is fed through feeding pipe 20 wherein a moulding pipe 21 is present, which screens off a central space and may be porous or not. After the curd in opened position of the bottom knife 23 is filled into the shaping trough 22 the curd is cut off by actuating piston 28, which moves the bottom knife 23. The piston 35 which moves the central moulder 24 has moved the moulder at the beginning of the filling step upwards to the upper level 26 of the shaping trough 22. The curd is introduced along the central moulder 24 into the trough 22 and prepressed by the dosing plate 32 which is actuated by the piston 35, during which the central moulder 24 remains in its position.

Subsequently, both the dosing plate 32 which may move independently of the moulder 24 and, simultaneously or thereafter, the central moulder 24 is moved downwards till they both are at the same level of the bottom plate 33 of the shaping trough 22. By means of piston 27 the trough with the filled curd, which is now open at the top and the bottom, is slid to the left between the pressing plate 34 and the cheese mould 30, and the curd provided with the central opening, which owing to the prepressing step still slightly sticks to the walls of the trough 22, is pushed into the cheese mould 30 by means of said plate 34 which cheese mould contains a fixed central moulder 31 and after being transported is subjected to further treatments not shown. In the drawing 22' indicates the block of curd which is pushed into the cheese mould.

### Example

A Gouda cheese was prepared in the usual way, starting from 100 l pasteurized milk, to which rennet and acid agent were added. The milk was curdled after about 30 minutes, whereafter the formed cheese curd was cut, the whey drained off, followed by stirring and draining. These preparation steps are known and need not be further illustrated in detail.

It may be mentioned that the preparation took two hours and that one finally obtained about 10 kg of curd. The curd was filled into the cheese mould, which had a diameter of 30 cm and a height of 15 cm. The curd was introduced to a height of 15 cm whereafter it was pressed during 4 hours by means of a hydraulic press so that it still went down a few cms. Subsequently the formed mass of cheese was removed from the mould.

This shape had the dimensions of the diameter of the cheese mould with a height of 12 cm. After trimming and turning the cheese block was immersed in a brine bath for $3\frac{1}{2}$ days and then stored. After application of a plastic layer around the cheese ageing took place on storage racks in the ageing room.

The same treatment with the same ingredients was carried out in the cheese mould wherein the central moulder according to the invention was used. This consisted of an open cylindrical central moulder with a diameter of 15 cm and a height of 15 cm. The central moulder was arranged in the cheese mould whereafter a second cylindrical open moulder with a height of 7 cm was pushed therein to a depth of 1 cm.

This moulder like the central moulder had a wall thicknes of about 1 mm. The moulders as well as the cheese mould were made of stainless steel especially designed for the dairy industry and provided with small holes. The curd was now introduced into the same cheese mould of which the volume was reduced proportionally to the central space saved. The follower was applied and in the same way as in the first case pressure was exerted till the curd had dropped about 3 cm.

The second moulder was also pressed down about 3 cm in the central moulder. The further treatments were identical with those of the first case. The model obtained had a central uniform opening of which on the lateral parts a normal rind was formed. When releasing the cheese from the mould the central moulder and the second moulder were at the same time as the cheese removed from the cheese mould and carried off.

The cheese with open model according to the invention appeared to possess the advantages as earlier described while a substantial reduction of the ageing time could be established.

### Claims

1. Cheese model which may be flattened or not, the model having a central opening, characterized in that the cheese consists of semi-hard or hard cheese, especially of the Gouda, Kanter or Cheddar type, the surface of the central opening forming with the surface of the remainder of the cheese a continuous smooth rind.

2. Process of preparing a semi-hard or hard cheese product of the shape defined in claim 1 by introducing a curd obtained from a milk product into a cheese mould, removing the greater part of the whey by pressing and salting the thus treated curd put in the definite shape and ageing it to the final cheese product, characterized in that a cheese mould is used with a central moulder (11, 12, 13; 14, 15) which screens off a central part of the cheese mould corresponding with the opening to be provided in the cheese, during introducing of the curd, during pressing and further treatments, which moulds are composed of an inert metal or plastics porous material enabling draining of the curd.

3. Cheese mould composed of an inert metal or plastics porous material to be used in the process of claim 2, characterized in that it contains a central moulder (11, 12) which slidably cooperates with a cylinder (13) movable therein to screen off curd from the central portion of the mould.

4. Cheese mould composed of an inert metal or plastics porous material, to be used in the process of claim 2, characterized in that it contains a central moulder (15) fixed to the mould (10) which cooperates with a follower (4, 5) provided with an opening (14) which during pressing is slidable over the central moulder (15).

5. Cheese mould according to claims 3 or 4, characterized in that the central moulder (11, 12; 15) is provided with upright edges which fit into the cheese mould (10) and are removable from the mould, said mould being made of inert metal or plastics porous material enabling draining of the curd.

6. Cheese mould according to claims 3—5, characterized in that in the bottom of the mould a central opening is present in the form of a seat wherein a removable part is fitting which can only be removed in upward direction from the cheese mould, to which part the central moulder is attached.

7. Cheese mould according to claims 3—5, characterized in that the central moulder is slidable in a central opening in the bottom of the mould and means are provided to accommodate for the downward movement of the central moulder during compression of the curd.

8. Process for the continuous preparation of a cheese according to claim 1, wherein the curd after preparation is continuously fed through a pipe to a shaping trough, into which predetermined pieces are dosed by means of a dosing cylinder, whereafter the dosed block of curd is filled into a cheese mould which is carried off and subjected to further treatments, characterized in that the curd is supplied to a feeding pipe (20) with a central moulding pipe (21), by which a central part is screened off; the bottom of the shaping trough (22) acts as a dosing plate (33) which when the shaping trough (22) is filled is moved upwards to prepress the curd; in the shaping trough (22) a central moulder (24) is present, made as a movable piston which during filling of the shaping trough is in its upper position and screens off a central space in the shaping trough (22) and which after the shaping trough (22) has been filled and after the curd has been prepressed by the bottom (32) is moved downwards as well as the bottom (32) till these are lying in one plane with the bottom plate (33) of the shaping trough (22) in a lower bottom position, said block of curd after dosing is cut off by a bottom knife (23), which bottom knife keeps the feeding pipe (20) closed till the following feeding cycle, the block of curd with central opening is slid into a filling trough by means of a sliding device (27) and thence is pressed by a pushing plate (34) into a cheese mould (30) provided with a central moulder (31), which mould is then carried off to the other processing steps.

9. Process for the continuous preparation of a cheese according to claim 1, by continuously feeding the curd through a feeding pipe to a shaping trough (22), wherein predetermined blocks are dosed by means of a dosing cylinder, after which the dosed block of curd is carried off to a cheese mould which is transported and subjected to further treatments, characterized in that in the feeding pipe (20) a central moulding pipe (21) is provided which is movable to the level of a bottom dosing plate to screen off a central space during filling of the curd in the shaping trough (22) wherein after filling of the shaping trough (22) the block of curd is cut through by the bottom knife (23) of the feeding column, which bottom knife comprises two semi-circular knives, whereafter the block of curd is prepressed by an upwardly moving bottom-dosing plate (33) and after the dosing plate (33) has again returned to its lower bottom position (32), the moulding pipe (21) is withdrawn into the feeding pipe (20) and the block of curd carried off and filled into a cheese mould (30) provided with a central moulder (31), which is further transported, whereafter the cycle will start again.

10. Process for the continuous preparation of a cheese according to claim 1, wherein the curd is supplied through a feeding pipe (20) and dosed into a shaping trough (22), from which shaping trough after filling a predetermined block of curd is moved out, which block of curd is deposited by gravity into a cheese mould and subjected to further treatments, characterized in that, the cheese mould is provided with a part with cutting edges so that on insertion of the block of curd in the cheese mould provided with a central moulder a central part the size of the central moulder is cut off.

11. Apparatus for carrying out the process of claim 8, comprising a feeding pipe (20), a shaping trough (22), wherein the curd is fed, a knife bottom (23) with actuating piston (28) moving the knife (23) to cut the curd when the trough is filled, a piston (27) which is actuated to move the curd block from the trough into a cheese mould (30), characterized in that in the feeding pipe (20) a fixed moulding pipe (21) is present, the trough (22) is provided with a slidable central moulder (24) which when actuated moves the moulder to the upward level (26) of the trough (22) at the beginning of the filling step, a dosing plate (33) actuated by a piston (35) to prepass the filled curd, and a cheese mould (30) provided with a central moulder (31) to receive the dosed curd block with central opening.

12. Apparatus for carrying out the process of claim 9, characterized in that the moulding pipe (21) is movable to the level of the bottom plate (33) to screen off the filling trough, that the knife bottom is made of semi-circular blades, which cooperate in such a way that the moulding pipe (21) is withdrawn from the trough after the prepressing step.

**Revendications**

1. Type de fromage pouvant être aplati ou non, ce type de fromage comportant un évidement central, caractérisé en ce que le fromage est un fromage semi-dur ou dur, en particulier, de type Gouda, Kanter ou Cheddar, la surface de cet évidement central formant une croûte lisse et continue avec la surface restante du fromage.

2. Procédé de préparation d'un produit fromager semi-dur ou dur ayant la forme définie dans la revendication 1 en introduisant une caillebotte obtenue à partir de lait dans un moule à fromage, en éliminant la majeure partie du petit-lait par pressage et en salant la caillebotte ainsi traitée sous la forme définie et en la laissant vieillir pour obtenir un fromage final, caractérisé en ce qu'on utilise un moule à fromage comportant un élément de moulage central (11, 12, 13; 14, 15) isolant une partie central du moule à fromage qui correspond à l'évidement devant être ménagé dans le fromage, au cours de l'introduction de la caillebotte, au cours du pressage et au cours des traitements ultérieurs, ces moules étant constitués d'une matière métallique ou plastique poreuse inerte permettant l'égouttage de la caillebotte.

3. Moule à fromage constitué d'une matière métallique ou d'une matière plastique poreuse inerte et devant être utilisé dans le procédé selon la revendication 2, caractérisé en ce qu'il contient un élément de moulage central (11, 12) coopérant de manière coulissante avec un cylindre (13) pouvant s'y déplacer afin d'isoler la caillebotte vis-à-vis de la partie centrale du moule.

4. Moule à fromage constitué d'une matière métallique ou d'une matière plastique poreuse inerte et devant être utilisé dans le procédé selon la revendication 2, caractérisé en ce qu'il contient un élément de moulage central (15) qui y est fixé et qui coopère avec un élément suiveur (4, 5) comportant une ouverture (14) et qui, au cours du pressage, peut coulisser sur l'élément de moulage central (15).

5. Moule à fromage selon la revendication 3 ou 4, caractérisé en ce que l'élément de moulage central (11, 12; 15) comporte des bords verticaux qui viennent s'adapter dans le moule à fromage (10) et qui peuvent se déplacer hors du moule, ce dernier étant réalisé en une matière métallique ou en une matière plastique poreuse inerte permettant l'égouttage de la caillebotte.

6. Moule à fromage selon les revendicatons 3 à 5, caractérisé en ce que, dans le fond du moule, est pratiquée une ouverture centrale sous forme d'un siège dans lequel vient s'adapter une pièce amovible qui ne peut être retirée que vers le haut hors du moule à fromage et à laquelle est fixé l'élément de moulage central.

7. Moule à fromage selon les revendications 3 à 5, caractérisé en ce que l'élément de moulage central peut coulisser dans une ouverture centrale pratiquée dans le fond du moule, tandis que l'on prévoit des moyens pour assurer le mouvement descendant de l'élément de moulage central au cours de la compression de la caillebotte.

8. Procédé de préparation en continu d'un fromage selon la revendication 1, procédé dans lequel, après sa préparation, la caillebotte est chargée continuellement par une conduite dans un chenal de façonnage dans lequel des morceaux prédéterminés sont dosés au moyen d'un cylindre de dosage, après quoi le bloc dosé de caillebotte vient remplir un moule à fromage qui est évacué et soumis à des traitements complémentaires, caractérisé en ce que la caillebotte est amenée à une conduite d'alimentation (20) comportant une conduite de moulage centrale (21) par laquelle une partie centrale est isolée; le fond du chenal de façonnage (22) agit à la manière d'une plaque de dosage (33) qui, lorsque le chenal de façonnage (22) est rempli, se déplace vers le haut pour presser préalablement la caillebotte; dans le chenal de façonnage (22) est prévu un élément de moulage central (24) réalisé sous forme d'un piston mobile qui, au cours du remplissage du chenal de façonnage, occupe sa position supérieure et isole un espace central dans le chenal de façonnage (22) tandis que, après que ce chenal de façonnage (22) a été rempli et après que la caillebotte a été préalablement pressée par le fond (32), il est déplacé vers le bas au même titre que le fond (32) jusqu'à ce qu'ils viennent se placer dans un plan avec la plaque inférieure (33) du chenal de façonnage (22) dans une position inférieure, ce bloc de caillebotte étant, après dosage, découpé par une lame inférieure (23) maintenant la conduite d'alimentation (20) fermée jusqu'au cycle d'alimentation suivant, le bloc de caillebotte comportant un évidement central glissant dans un chenal de remplissage au moyen d'un dispositif coulissant (27), pour être ensuite pressé, par une plaque de poussée (34) dans un moule à fromage (30) comportant un élément de moulage central (31), ce moule étant ensuite évacué vers les autres étapes de traitement.

9. Procédé de préparation en continu d'un fromage selon la revendication 1 en amenant continuellement la caillebotte par une conduite d'alimentation à un chenal de façonnage (22), procédé dans lequel des blocs prédéterminés sont dosés au moyen d'un cylindre de dosage, après quoi le bloc dosé de caillebotte est évacué vers un moule à fromage qui est transporté et soumis à des traitements complémentaires, caractérisé en ce que, dans la conduite d'alimentation (20), on prévoit une conduite de moulate centrale (21) pouvant être déplacée jusqu'au niveau d'une plaque de dosage inférieure afin d'isoler un espace central au cours du rem-plissage de chenal de façonnage (22) par la caillebotte et, lorsque ce chenal de façonnage (22) est rempli, le bloc de caillebotte est découpé par la lame inférieure (23) de la colonne d'alimentation, cette lame inférieure étant constituée de deux lames semi-circulaires, après quoi le bloc de caillebotte est préalablement pressé par une plaque de dosage inférieure (33) se déplaçant vers le haut et, lorsque cette plaque de dosage (33) est à nouveau revenue dans sa position inférieure (32), la conduite de moulage (21) est retirée dans la conduite d'alimentation (20), tandis que le bloc de caillebotte est évacué et vient remplir un moule à fromage (30) comportant un élément de moulage central (31), ce moule étant ensuite évacué, après quoi le cycle recommence.

10. Procédé de préparation en continu d'un fromage selon la revendication 1, procédé dans lequel la caillebotte est chargée par une conduite d'alimentation (20), tandis qu'elle est dosée dans un chenal de façonnage (22) duquel, après remplissage, un bloc prédéterminé de caillebotte est déplacé, ce bloc de caillebotte venant se déposer par gravité dans un moule à fromage pour être soumis à des traitements complémentaires, caractérisé en ce que le moule à fromage comporte une pièce à bords tranchants de telle sorte que, lors de l'introduction du bloc de caillebotte dans ce moule à fromage comportant un élément de moulage central, une partie centrale ayant la dimension de ce dernier soit découpée.

11. Appareil pour la mise en oeuvre du procédé selon la revendication 8, cet appareil comprenant une conduite d'alimentation (20), un chenal de façonnage (22) dans lequel la caillebotte est chargée, un fond à lame (23) avec un piston de commande (28) déplaçant la lame (23) pour découpler la caillebotte lorsque le chenal est rempli, un piston (27) actionné pour déplacer le bloc de caillebotte hors du chenal pour l'amener dans le moule à fromage (30), caractérisé en ce que la conduite d'alimentation (20) comporte une conduite de moulage fixe (21), le chenal (22) comporte un élément de moulage central coulissant (24) qui, lorsqu'il est actionné, se déplace jusqu'au niveau supérieur (26) du chenal (22) au début de l'étape de remplissage, une plaque de dosage (33) étant actionnée par un piston (35) pour presser préalablement la caillebotte remplissant le chenal, un moule à fromage (30) comportant un élément de moulage central (31) pour recevoir le bloc de caillebotte dosé comportant un évidement central.

12. Appareil pour la mise en oeuvre du procédé selon la revendication 9, caractérisé en ce que la conduite de moulage (21) peut se déplacer jusqu'au niveau de la plaque inférieure (33) afin d'isoler le chenal de remplissage, le fond à lame étant constitué de lames semi-circulaires qui coopèrent de telle sorte que la conduite de moulage (21) soit retirée du chenal après l'étape de pressage préalable.

## Patentansprüche

1. Käseausführung, die abgeflacht sein kann oder nicht, wobei die Ausführung eine mittige Öffnung hat, dadurch gekennzeichnet, daß der Käse aus einem Halbhart- oder Hartkäse besteht, insbesondere vom Gouda-, Kanter- oder Cheddartyp ist, wobei die Oberfläche der mittigen Öffnung mit der Oberfläche des Rests des Käses eine kontinuierliche glatte Rinde bildet.

2. Verfahren zum Herstellen eines halbharten oder harten Käseprodukts in der Form gemäß Anspruch 1, wobei man von einem Milchprodukt erhaltene geronnene Milch in eine Käseform bringt, den größeren Teil der Molke durch Pressen entfernt und die so behandelte geronnene Milch in die endgültige Form bringt sowie sie zu dem endgültigen Käseprodukt reifen läßt, dadurch gekennzeichnet, daß eine Käseform mit einem mittigen Formgeber (11, 12, 13; 14, 15) verwendet wird, der einen mittigen Teil der Käseform, welcher der in dem Käse vorzusehenden Öffnung entspricht, während des Einbringens der geronnenen Milch, während des Pressens und der weiteren Behandlungen abdeckt, wobei diese Formen aus einem porösen Inertmetall- oder Kunststoffmaterial bestehen, so daß ein Entwässern der geronnenen Milch ermöglicht wird.

3. Käseform, die aus einem porösen Inertmetall- oder Kunststoffmaterial besteht, zur Verwendung in dem Verfahren nach Anspruch 2, dadurch gekennzeichnet, daß sie einen mittigen Formgeber (11, 12) enthält, der verschiebbar mit einem darin beweglichen Zylinder (13) derart zusammenwirkt, daß geronnene Milch vor dem mittigen Teil der Form abgeschirmt wird.

4. Käseform, die aus einem porösen Inertmetall- oder Kunststoffmaterial besteht, zur Verwendung in dem Verfahren nach Anspruch 2, dadurch gekennzeichnet, daß sie einen mittigen Formgeber (15) enthält, der an der Form (10) befestigt ist und mit einem Folger (4, 5) zusammenwirkt, welcher mit einer Öffnung (14) versehen ist, die während des Pressens über dem mittigen Formgeber (15) verschiebbar ist.

5. Käseform nach Anspruch 3 oder 4, dadurch gekennzeichnet, daß der mittige Formgeber (11, 12; 15) mit aufrechten Rändern versehen ist, die in die Käseform (10) passen und von der Form entfernbar sind, wobei die Form aus einem porösen Inertmetall- oder Kunststoffmaterial hergestellt ist, welches ein Entwässern der geronnenen Milch ermöglicht.

6. Käseform gemäß den Ansprüchen 3 bis 5, dadurch gekennzeichnet, daß im Boden der Form eine mittige Öffnung in der Form eines Sitzes vorhanden ist, worin ein entfernbares Teil eingelegt ist, das nur in Aufwärtsrichtung von der Käseform entfernt werden kann, an welchem Teil der mittige Formgeber angebracht ist.

7. Käseform nach den Ansprüchen 3 bis 5, dadurch gekennzeichnet, daß der mittige Formgeber in einer mittigen Öffnung im Boden der Form verschiebbar ist, und daß Mittel zum Aufnehmen der Abwärtsbewegung des mittigen Formgebers während des Zusammendrückens der geronnenen Milch vorgesehen sind.

8. Verfahren zur kontinuierlichen Herstellung eines Käses nach Anspruch 1, wobei die geronnene Milch nach der Herstellung kontinuierlich durch eine Rohr zu einem Formungsbehälter zugeführt wird, in den vorbestimmte Stücke mittels eines Dosierzylinders dosiert werden, wonach der dosierte Block von geronnener Milch in eine Käseform gefüllt wird, die abtransportiert und weiteren Behandlungen ausgesetzt wird, dadurch gekennzeichnet, daß die geronnene Milch einem Zuführungsrohr (20) mit einem mittigen Formungsrohr (21), mittels dessen ein mittiger Teil abgedeckt wird, zugeführt wird; daß der Boden des Formungsbehälters (22) als eine Dosierplatte (33) arbeitet, die, wenn der Formungsbehälter (22) gefüllt ist, zum Vorpressen der geronnenen Milch nach aufwärts bewegt wird; daß in dem Formungsbehälter (22) ein mittiger Formgeber (24) vorhanden ist, der als eine bewegbarer Kolben ausgebildet ist, welcher während des Füllens des Formungsbehälters in seiner oberen Position ist und einen mittigen Raum in dem Formungsbehälter (22), abdeckt, und welcher, nachdem der Formungsbehälter (22) gefüllt worden ist und nachdem die geronnene Milch durch den Boden (32) vorgepreßt worden ist, ebenso wie der Boden (32) nach abwärts bewegt wird, bis diese in einer Ebene mit der Bodenplatte (33) des Formungsbehälters (22) in einer unteren Bodenposition liegen; daß der Block aus geronnener Milch nach dem Dosieren mittels eines Bodenmessers (23) abgeschnitten wird, welches Bodenmesser das Zuführrohr (20) bis zum folgenden Zuführungszyklus geschlossen hält; daß der Block von geronnener Milch mit der mittigen Öffnung mittels einer Verschiebeeinrichtung (27) in einen Füllbehälter geschoben und dann mittels einer Druckplatte (34) in eine Käseform (30) gepreßt wird, die mit einem mittigen Formgeber (31) versehen ist, wobei diese Form dann zu anderen Verfahrensschritten abtransportiert wird.

9. Verfahren zum kontinuierlichen Herstellen von Käse nach Anspruch 1 durch kontinuierliches Zuführen der geronnenen Milch durch ein Zuführrohr zu einem Formungsbehälter (22), in den vorbestimmte Blocks mittels eines Dosierzylinders dosiert werden, wonach der dosierte Block von geronnener Milch zu einer Käseform abtransportiert wird, die zu weiteren Behandlungen transportiert und diesen weiteren Behandlungen ausgesetzt wird, dadurch gekennzeichnet, daß in dem Zuführrohr (20) ein mittiges Formungsrohr (21) vorgesehen ist, das zu dem Niveau einer Bodendosierplatte bewegbar ist, um einen mittigen Raum während des Einfüllens der geronnenen Milch in den Formungsbehälter (22) abzudecken, wobei der Block von geronnener Milch nach dem Füllen des Formungsbehälters (22) mittles eines Bodenmessers (23) von der Zuführungssäule abgeschnitten wird, wobei das Bodenmesser zwei halbkreisförmige Messer umfaßt, wonach der Block von geronnener Milch durch eine sich nach aufwärts bewegende Bodendosierplatte (33) vorgepreßt wird, und daß, nachdem die Dosierplatte (33) wieder in ihre untere Bodenposition (32) zurückgekehrt ist, das Formungsrohr (21) in das Zuführrohr (20) zurückgezogen wird, und daß der Block von geronnener Milch abtransportiert sowie in eine Käseform (30) gefüllt wird, die mit einem mittigen Formgeber (31) versehen ist, welche weitertransportiert wird, wonach der Zyklus erneut beginnt.

10. Verfahren zum kontinuierlichen Herstellen eines Käses nach Anspruch 1, worin die geronnene Milch durch ein Zuführrohr (20) zugeführt und in einen Formungsbehälter (22) dosiert wird, von welchem Formungsbehälter nach dem Füllen ein vorbestimmter Block von geronnener Milch herausbewegt wird, welcher Block aus geronnener Milch durch Schwerkraft in eine Käseform abgelegt und weitern Behandlungen unterworfen wird, dadurch gekennzeichnet, daß die Käseform mit einem Teil mit Schneidkanten versehen ist, so daß beim Einbringen des Blocks von geronnener Milch in die Käseform, die mit einem mittigen Formgeber versehen ist, ein mittiger Teil der Abmessung des mittigen Formgebers abgeschnitten wird.

11. Einrichtung zum Ausführen des Verfahrens nach Anspruch 8, umfassend ein Zuführrohr (20), einen Formungsbehälter (22), in den die geronnene Milch zugeführt wird, einen Messerboden (23) mit einem Betätigungskolben (28), der das Messer (23) zum Durchschnieden der geronnenen Milch bewegt, wenn der Behälter gefüllt ist, einen Kolben (27), der zum Bewegen des Blocks geronnener Milch von dem Behälter in eine Käseform (30) betätigt wird, dadurch gekennzeichnet, daß in dem Zuführrohr (20) ein festes Formungsrohr (21) vorhanden ist, daß der Behälter (22) mit einem verschiebbaren mittigen Formgeber (24) versehen ist, was, wenn er betätigt wird, den Formgeber zum aufwärtigen Niveau (26) des Behälters am Beginn des Füllschritts bewegt, sowie mit einer Dosierplatte (33), die durch einen Kolben (35) zum Vorpressen der eingefüllten geronnenen Milch betätigt wird; und mit einer Käseform (30), die mit einem mittigen Formgeber (31) zur Aufnahme des dosierten Blocks geronnener Milch mit einer mittigen Öffnung versehen ist.

12. Einrichtung zum Durchführung des Verfahrens nach Anspruch 9, dadurch gekennzeichnet, daß das Formungsrohr (21) zu dem Niveau der Bodenplatte (33) bewegbar ist, um den Füllbehälter abzuschirmen; daß der Messerboden aus halbkreisförmigen Messern Hergestellt ist, die in einer solchen Weise zusammenwirken, daß das Formungsrohr (21) nach dem Vorpreßschritt von dem Behälter zurückgezogen wird.

FIG.11

FIG.1

FIG.2

FIG.3

4

15

FIG.4

FIG.5 FIG.6

FIG.7 FIG. 8 FIG.9 FIG.10

FIG.12